# EUROPÄISCHE PATENTANMELDUNG

(11) **EP 4 707 649 A1**
(43) Veröffentlichungstag der Anmeldung: **11.03.2026**
(21) Anmeldenummer: 24199005.0
(22) Anmeldetag: 06.09.2024
(51) Int. Cl.: F16K 31/04, F16K 31/05

(54) **STELLANTRIEB, ANORDNUNG MIT EINEM STELLANTRIEB UND MONTAGEVERFAHREN**

(71) Anmelder: Siemens Schweiz AG, 8047 Zürich (CH)
(72) Erfinder: Heil, Jörg, 6300 Zug (CH); Hüsser, Cédric, 8905 Arni (CH); Wattenhofer, Severin, 6344 Meierskappel (CH)
(74) Vertreter: Siemens Patent Attorneys

(57) **Zusammenfassung**

Die Erfindung betrifft einen Stellantrieb (1) für eine (Luft-)Klappe oder ein Ventil (100) zum Einstellen eines gasförmigen oder flüssigen Volumenstroms. Der Stellantrieb (1) weist eine in oder an einem Grundkörper des Stellantriebs (1) aufgenommene Antriebseinheit (2) sowie ein abtriebsseitiges Stellelement (4) auf, wobei das Stellelement (4) eine um eine Stellachse (5) drehbar angeordnete Antriebshülse (6) zum Betätigen der (Luft-)Klappe oder des Ventils (100) aufweist. Dabei ist die Antriebshülse (6) mit einem drehbaren Antriebszapfen (106) der (Luft-)Klappe oder des Ventils (100) durch Einführen des Antriebszapfens (106) in die Antriebshülse (6) derart koppelbar, dass in einer ersten Koppelposition ein Drehmoment von der Antriebshülse (6) auf den Antriebszapfen (106) übertragbar ist, während in einer zweiten Koppelposition kein Drehmoment von der Antriebshülse (6) auf den Antriebszapfen (106) übertragbar ist. Durch die verschiedenen Koppelpositionen wird die Montage des Stellantriebs (1) an der (Luft-)Klappe bzw. am Ventil (100) deutlich vereinfacht.

## Beschreibung

Die Erfindung betrifft einen Stellantrieb für eine (Luft-)Klappe oder für ein Ventil zum Einstellen eines gasförmigen oder flüssigen Volumenstroms. Vorzugsweise ist der Stellantrieb ein Luftklappendrehantrieb. Er kommt insbesondere bei sogenannten HLK-Anwendungen für Heizung, Lüftung oder Klimatechnik zum Einsatz. Der betrachtete Stellantrieb weist eine in oder an einem Grundkörper des Stellantriebs aufgenommene Antriebseinheit und ein abtriebsseitiges Stellelement auf. Das Stellelement umfasst eine um eine Stellachse drehbar angeordnete Antriebshülse zum Betätigen der (Luft-)Klappe oder des Ventils.

Weiterhin betrifft die Erfindung eine Anordnung mit einem derartigen Stellantrieb sowie ein Montageverfahren des Stellantriebs an einem Gehäuse einer (Luft-)Klappe oder eines Ventils.

Bei derartigen Stellantrieben wird die Klappe oder das Ventil durch das Stellelement des Stellantriebs um eine Stellachse bewegt oder sogar zumindest teilweise durch dieses direkt gebildet. Der Stellantrieb ist oftmals dazu eingerichtet, das Stellelement von einer ersten Stellposition in eine zweite Stellposition zu bewegen. Beide Stellpositionen können üblicherweise Endanschläge bilden. Der Stellanschluss kann innerhalb eines vorgegebenen Stell- oder Drehwinkelbereichs zwischen der ersten Stellposition und der zweiten Stellposition um seine Stellachse drehbar angeordnet sein. Der maximale Stellwinkelbereich zwischen diesen beiden Stellpositionen bzw. Drehstellungen liegt typischerweise bei 90° ± 10°.

Typischerweise wird ein Stellantrieb mit seiner planen Unterseite voran z.B. an einem Lüftungsrohr oder an einem Lüftungskanal angebracht, um eine Achse der Lüftungsklappe aufzunehmen. Dabei kann es vorkommen, dass zunächst die Winkelposition des mit dem Stellantrieb zu koppelnden Betätigungselements der (Luft-)Klappe oder des Ventils justiert werden muss. Dies erfolgt zumeist manuell mit Hilfe eines dafür geeigneten Werkzeugs, beispielsweise eines Handhebels oder eines Schraubenschlüssels. Weiterhin kann es aus Platzgründen erforderlich sein, den Stellantrieb in unterschiedlichen Winkelstellungen relativ zur der (Luft-)Klappe bzw. zum Ventil zu positionieren. Diese Aspekte können zu einem höheren Aufwand für die Montage des Stellantriebs führen.

Es ist daher Aufgabe der vorliegenden Erfindung, einen Stellantrieb anzugeben, welcher universeller und/oder flexibler einsetzbar ist sowie einen Stellantrieb, eine Anordnung mit einem solchen Stellantrieb und ein Montageverfahren bereitzustellen, welche geeignet sind, die voranstehend beschriebenen Nachteile zumindest teilweise zu beheben.

Die Aufgabe der Erfindung wird durch die Merkmale des Stellantriebs, der Anordnung mit einem solchen Stellantrieb sowie des Montageverfahrens gemäß den unabhängigen Ansprüchen gelöst. Vorteile und Ausgestaltungen der Erfindung, die einzeln oder in Kombination miteinander einsetzbar sind, sind Gegenstand der abhängigen Ansprüche.

Der erfindungsgemäße Stellantrieb für eine (Luft-)Klappe oder für ein Ventil zum Einstellen eines gasförmigen oder flüssigen Volumenstroms weist eine in oder an einem Grundkörper des Stellantriebs aufgenommene Antriebseinheit sowie ein abtriebsseitiges Stellelement auf, wobei das Stellelement eine um eine Stellachse drehbar angeordnete Antriebshülse aufweist. Dabei ist die Antriebshülse mit einem drehbar gelagerten Antriebszapfen der (Luft-)Klappe oder des Ventils derart koppelbar, dass in einer ersten Koppelposition ein Drehmoment von der Antriebshülse auf den Antriebszapfen übertragbar ist, während in einer zweiten Koppelposition kein Drehmoment von der Antriebshülse auf den Antriebszapfen übertragbar ist.

Das Stellelement ist dabei mit der Antriebseinheit mechanisch gekoppelt. Die Antriebseinheit kann beispielsweise aus einem Elektromotor mit einem nachgeschalteten, mechanischen Reduziergetriebe gebildet sein, an das abtriebsseitig das Stellelement angekoppelt ist. Ferner kann auch eine Motorsteuereinheit und/oder das Stellelement Teil der Antriebeinheit sein. Die Antriebshülse dient der Betätigung eines Stellglieds der (Luft-)Klappe bzw. des Ventils. Aus der Verwendung des erfindungsgemäßen Stellantriebs ergibt sich der Vorteil, dass bei der Befestigung des Stellantriebs an der (Luft-)Klappe bzw. am Ventil zunächst eine Justage des Stellglieds der (Luft-)Klappe bzw. des Ventils hinsichtlich seiner die Drehwinkellage erfolgen kann, indem die Antriebshülse durch Einführen des Antriebszapfens in die Antriebshülse mit dem mit dem Stellglied mechanisch wirkverbundenen Antriebszapfen in der ersten Koppelposition gekoppelt wird, so dass ein Drehmoment von der Antriebshülse auf den Antriebszapfen übertragbar ist. Hierzu ist kein zusätzliches Werkzeug erforderlich, da als Hebelelement für diese Justage der Grundkörper des Stellantriebs verwendet wird.

Die erste Koppelposition unterscheidet sich von der zweiten Koppelposition durch eine Verschiebung der Antriebshülse relativ zum Antriebszapfen entlang der Stellachse. Hierbei ergeben sich zwei Möglichkeiten: entweder wird bei der Kopplung der Antriebshülse des Stellantriebs mit dem Antriebszapfen der (Luft-)Klappe oder des Ventils zunächst die erste Koppelposition, in der ein Drehmoment von der Antriebshülse auf den Antriebszapfen übertragbar ist, und dann die zweite Koppelposition, welche eine Freilaufposition darstellt, in der kein Drehmoment von der Antriebshülse auf den Antriebszapfen übertragbar ist, erreicht, oder umgekehrt. Durch Verschieben des Stellantriebs relativ zur der (Luft-)Klappe bzw. zum Ventil entlang des Stellachse ist die zweite Koppelposition erreichbar, in der kein Drehmoment von der Antriebshülse auf den Antriebszapfen übertragbar ist, sodass der Grundkörper des Stellantriebs in einer beliebige Drehwinkellage relativ zur (Luft-)Klappe bzw. zum Ventil verbracht werden kann, ohne dabei die Drehwinkellage des Stellglieds zu verändern. Auf diese Weise kann der zur Verfügung stehende Bauraum je nach Einbausituation besser ausgenutzt werden, die Montage des Stellantriebs an der (Luft-)Klappe bzw. am Ventil wird dadurch deutlich vereinfacht.

In einer vorteilhaften Weiterbildung des Stellantriebs weist die Antriebshülse Mittel zur formschlüssigen Kopplung mit dem Antriebszapfen auf.

Mit Hilfe der in tangentialer Richtung wirkenden formschlüssigen Kopplung ist eine sichere rotatorische Kraftübertragung von der Antriebshülse auf den Antriebszapfen gewährleistet. Die formschlüssige Kopplung ist beispielsweise mittels zumindest einer an einer Innenfläche der Antriebshülse ausgebildete, in axialer Richtung verlaufende Nut, welche in zumindest einen hierzu hinsichtlich Lage und Größe korrespondierenden, an einer Mantelfläche des Antriebszapfen ausgebildeten, in axialer Richtung verlaufende Steg eingreift, realisierbar. Ebenso wäre eine umgekehrte Anordnung möglich, d.h. der zumindest eine Steg ist an der Innenfläche der Antriebshülse angeordnet und dazu ausgebildet mit zumindest einer an der Mantelfläche des Antriebszapfen ausgebildeten Nut zusammenzuwirken. Ferner sind auch andere Ausführungsformen einer in tangentialer Richtung wirkenden formschlüssigen Kopplung der Antriebshülse mit dem Antriebszapfen möglich und vom Gedanken der Erfindung umfasst.

Im Gegensatz zu einer kraftschlüssigen Kopplung besteht darüber hinaus noch die Möglichkeit, die Antriebshülse relativ zum Antriebszapfen auf einfache Art und Weise in axialer Richtung zu verschieben, um die unterschiedlichen Koppelpositionen zwischen Antriebshülse und Antriebszapfen zu realisieren.

In einer weiteren vorteilhaften Weiterbildung weist das Stellelement ein Federelement zur federelastischen Kopplung der Antriebshülse mit dem Antriebszapfen auf.

Das Federelement kann beispielsweise als eine in der Antriebshülse angeordnete Druckfeder ausgebildet sein, welche beim Aufstecken der Antriebshülse auf den Antriebszapfen zusammengedrückt wird und eine Federkraft auf die beteiligten Fügepartner ausübt, die diese auseinander drängt, so dass das Aufstecken der Antriebshülse auf den Antriebszapfen entgegen der Federkraft erfolgt. Auf diese Weise wird das Lösen der Verbindung zwischen Antriebshülse und Antriebszapfen unterstützt und vereinfacht. Vorteilhafterweise ist das Federelement so ausgelegt und dimensioniert, dass es sich in der ersten Koppelposition noch in einem entspannten, d.h. nicht zusammengedrückten Zustand, befindet, sodass erst in der zweiten Koppelposition eine Federkraft auf die beteiligten Fügepartner - Antriebshülse und Antriebszapfen - ausgeübt wird, sodass diese wieder in die erste Koppelposition gedrängt werden. Auf diese Weise ist sichergestellt, dass sich die Freilaufposition, in der kein Drehmoment von der Antriebshülse auf den Antriebszapfen übertragbar ist, nicht unbeabsichtigt einstellt, sondern ausschließlich bewusst ausgewählt wird.

In einer weiteren vorteilhaften Weiterbildung des Stellantriebs liegt die zweite Position zwischen der ersten Koppelposition und einer dritten Koppelposition, in der ein Drehmoment von der Antriebshülse auf den Antriebszapfen übertragbar ist.

Auf diese Weise ist die zweite Koppelposition, welche eine Freilaufposition darstellt, in der kein Drehmoment von der Antriebshülse auf den Antriebszapfen übertragbar ist, sowohl von der ersten Koppelposition als auch von der dritten Koppelposition direkt, ohne "Umweg" über eine der anderen Koppelpositionen, erreichbar. Die dritte Koppelposition stellt dabei eine Betriebsposition, dar, in der - nach erfolgreicher Montage des Stellantriebs an der (Luft-)Klappe bzw. am Ventil - im regulären Betrieb eine Drehmomentübertragung von der Antriebshülse auf den Antriebszapfen zum Einstellen eines gasförmigen oder flüssigen Volumenstroms erfolgt.

In einer weiteren vorteilhaften Weiterbildung weist der Stellantrieb zumindest ein Befestigungsmittel auf, um den Stellantrieb an der (Luft-)Klappe oder dem Ventil in der dritten Koppelposition zu fixieren.

Das zumindest eine Befestigungsmittel dient dazu, den Stellantrieb nach erfolgreicher Montage des Stellantriebs an der (Luft-)Klappe bzw. am Ventil ein Lösen dieser Verbindung wirksam zu unterbinden. Das zumindest eine Befestigungsmittel kann dabei sowohl axial wirkend ausgebildet sein, um ein Lösen der Verbindung in axialer Richtung, d.h. entgegen der Montagerichtung, als auch rotatorisch wirkend, um ein Verdrehen des Stellantriebs relativ zur der (Luft-)Klappe bzw. zum Ventil, wirksam zu unterbinden. Auf diese Weise ist eine sichere Verbindung zwischen dem Stellantrieb und der der (Luft-)Klappe bzw. dem Ventil sichergestellt.

In einer weiteren vorteilhaften Weiterbildung des Stellantriebs ist das zumindest eine Befestigungsmittel in Achsrichtung der Stellachse formschlüssig wirkend ausgebildet.

Durch den Formschluss wird ein einfaches Abziehen der Antriebshülse vom Antriebszapfen in Richtung der Stellachse, d.h. entgegen der Montagerichtung, wirksam verhindert. Bei dem zumindest einen Befestigungsmittel kann es sich beispielsweise um einen Schnapphaken handeln, welcher am Gehäuse des Stellantriebs ausgebildet ist und an einem an der (Luft-)Klappe oder dem Ventil ausgebildeten Rastvorsprung verrastet, um nach erfolgreicher Montage des Stellantriebs an der (Luft-)Klappe bzw. am Ventil ein Lösen der Verbindung in axialer Richtung, d.h. entgegen der Montagerichtung, wirksam zu unterbinden. Neben der Fixierung in axialer Richtung ist mittels des zumindest einen Befestigungsmittels zusätzlich auch eine Fixierung in tangentialer Richtung, d.h. gegen ein Verdrehen um die Stellachse, realisierbar. Die Montage des Stellantriebs an der (Luft-)Klappe bzw. am Ventil wird dadurch weiter vereinfacht.

In einer weiteren vorteilhaften Weiterbildung weist das Stellelement auf einer der Antriebshülse abgewandten Seite ein manuell betätigbares Handbedienelement zur manuellen Betätigung der Antriebshülse auf.

Mit Hilfe des Handbedienelements ist eine manuelle Betätigung der Antriebshülse, d.h. eine von Hand steuerbare Drehung der Antriebshülse um die Stellachse - und damit eine Drehung des mit der Antriebshülse gekoppelten Antriebszapfen - realisierbar. Vorteilhafterweise ist das Handbedienelement hierzu auf einer vom gekoppelten Antriebszapfen abgewandten Seite der Antriebshülse mit dieser mechanisch koppelbar. Die Justage des Stellantriebs relativ zur (Luft-) Klappe bzw. zum Ventil - und damit der Montageaufwand - werden dadurch weiter vereinfacht.

In einer weiteren vorteilhaften Weiterbildung des Stellantriebs weist das Handbedienelement einen zylindrischen Grundkörper sowie ein radial davon abstehendes Hebelelement auf, wobei das Hebelelement am Grundkörper in radialer Richtung linear verschiebbar gelagert ist.

Die Drehachse des zylindrischen Grundkörpers entspricht hinsichtlich Position und Orientierung der Stellachse des Stellantriebs. Durch die Verschiebung des Hebelelements in radialer Richtung relativ zum Grundkörper - und damit zur Stellachse - wird somit eine Vergrößerung des Abstands des Griffbereichs für die manuelle Betätigung zur Drehachse, wodurch bei manueller Betätigung bei gleicher Kraft ein höheres Drehmoment übertragbar ist. Der Bedienkomfort des Stellantriebs wird dadurch deutlich verbessert.

Die erfindungsgemäße Anordnung weist einen Stellantrieb der vorstehend beschriebenen Art sowie eine (Luft-)Klappe oder ein Ventil zum Einstellen eines gasförmigen oder flüssigen Volumenstroms auf, wobei die (Luft-)Klappe oder das Ventil einen mit der Antriebshülse des Stellantriebs drehfest gekoppelten Antriebszapfen aufweist.

In einer vorteilhaften Weiterbildung der Anordnung weist die (Luft-)Klappe oder das Ventil ein Gehäuse mit einem rohrförmigen Abschnitt auf, wobei der Antriebszapfen relativ zum Gehäuse drehbar gelagert ist.

Die erfindungsgemäße Anordnung dient zum Einstellen eines durch die (Luft-)Klappe oder das Ventil strömenden, gasförmigen oder flüssigen Volumenstroms mit Hilfe des daran befestigten Stellantriebs. Mit dem Antriebszapfen ist ein Stellglied der (Luft-)Klappe bzw. des Ventils drehfest verbunden, sodass bei Drehen des Antriebszapfens das im Inneren des rohrförmigen Gehäuses, genauer: im rohrförmigen Abschnitt drehbar gelagerte Stellglied der (Luft-)Klappe bzw. des Ventils betätigbar ist, um den durch den rohrförmigen Abschnitt des Gehäuses strömenden Volumenstrom variieren zu können. Hinsichtlich der prinzipiellen Vorteile der erfindungsgemäßen Anordnung wird auf die vorstehend beschriebenen Vorteile den erfindungsgemäßen Stellantrieb betreffend verwiesen.

Das erfindungsgemäße Verfahren zur Montage einer Anordnung der vorstehend beschriebenen Art weist die Schritte:
a) axiales Ausrichten der Antriebshülse und des Antriebszapfens entlang der Stellachse;
b) Einführen des Antriebszapfens in die Antriebshülse entlang der Stellachse;
c) Zustellen der Antriebshülse in Richtung des Antriebszapfens über die erste und zweite Koppelposition hinweg, bis die dritte Koppelposition erreicht ist; sowie
d) Fixieren des Stellantriebs an der (Luft-)Klappe oder dem Ventil mittels der am Stellantrieb ausgebildeten Befestigungsmittel
auf. Unter dem Begriff "Zustellen" wird eine Zustellbewegung der Antriebshülse in bezeichneter Richtung, d.h. in Richtung des Antriebszapfens, verstanden. Durch Aufstecken der Antriebshülse auf den Antriebszapfen wird ist eine schnelle und einfache Montage des Stellantriebs an der (Luft-)Klappe bzw. am Ventil realisierbar, indem die erste und die zweite Koppelposition beim Zustellen der Antriebshülse in die dritte Koppelposition "überfahren" werden und der Stellantrieb durch Zustellen der Antriebshülse in Richtung der Stellachse in die dritte Koppelposition verbracht und dort fixiert wird. Hinsichtlich der prinzipiellen Vorteile des erfindungsgemäßen Montageverfahrens wird auf die vorstehend beschriebenen Vorteile die Anordnung erfindungsgemäße bzw. den erfindungsgemäßen Stellantrieb betreffend verwiesen.

In einer vorteilhaften Weiterbildung des Verfahrens erfolgt vor Erreichen der dritten Koppelposition eine Winkeljustage des Antriebszapfens, indem der Grundkörper in der ersten Koppelposition um die Stellachse gedreht wird.

Ist im Rahmen der Montage eine zusätzliche Winkeljustage des Antriebszapfens erforderlich, so kann diese ohne die Verwendung eines zusätzlichen Werkzeugs in der ersten Koppelposition, d.h. vor dem Zustellen der Antriebshülse bis in die dritte Koppelpositon, erfolgen, indem in der ersten Koppelposition der gesamte Stellantrieb, welcher über die Antriebshülse mit dem Antriebszapfen drehfest verbunden ist, um einen definierten Stellwinkel gedreht wird. Aufgrund der drehfesten Kopplung der Antriebshülse mit dem Antriebszapfen ist dabei ein Drehmoment auf den Antriebszapfen übertragbar, welcher ein Verdrehen - und damit eine Justage - des Stellglieds der (Luft-)Klappe bzw. des Ventils bewirkt. Der Stellantrieb bzw. dessen Grundkörper wirkt dabei als manuell betätigbarer Hebel.

In einer weiteren vorteilhaften Weiterbildung des Verfahrens erfolgt vor Erreichen der dritten Koppelposition ein Ausrichten des Stellantriebs relativ zum Gehäuse der (Luft-)Klappe bzw. des Ventils, indem der Grundkörper in der zweiten Koppelposition um die Stellachse gedreht wird.

Vor Erreichen der dritten Koppelposition wird die zweite Koppelposition, in der kein Drehmoment von der Antriebshülse auf den Antriebszapfen übertragbar ist, erreicht. Daher ist es möglich, in dieser zweiten Koppelposition den Grundkörper des Stellantriebs relativ zum Gehäuse der (Luft-)Klappe bzw. des Ventils auszurichten, ohne dabei die Position des Stellglied der der (Luft-)Klappe bzw. des Ventils zu verändern. Die Montage des Stellantriebs an der der (Luft-) Klappe bzw. dem Ventil wird dadurch weiter vereinfacht.

Weitere Merkmale und Merkmalskombinationen der Erfindung ergeben sich aus den Figuren und deren Beschreibungen sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind. Dabei zeigen
- FIG 1: eine schematische Prinzipdarstellung eines Stellantriebs für eine (Luft-)Klappe oder ein Ventil in einer Seitenansicht;
- FIG 2: eine schematische Schnittdarstellung eines Ventils in einer in einer Seitenansicht;
- FIG 3: eine schematische Darstellung eines ersten Ausführungsbeispiels des erfindungsgemäßen Stellantriebs;
- FIG 4: eine schematische Darstellung der erfindungsgemäßen Anordnung in einer ersten Montageposition;
- FIG 5: eine schematische Detaildarstellung zu Figur 4;
- FIG 6: eine schematische Schnittdarstellung zu Figur 5;
- FIG 7: eine schematische Darstellung der erfindungsgemäßen Anordnung in einer zweiten Montageposition;
- FIG 8: eine schematische Detaildarstellung zu Figur 7;
- FIG 9: eine schematische Schnittdarstellung zu Figur 8;
- FIG 10: eine schematische Darstellung der erfindungsgemäßen Anordnung in einer dritten Montageposition;
- FIG 11: eine schematische Detaildarstellung zu Figur 10;
- FIG 12: eine schematische Schnittdarstellung zu Figur 11;
- FIG 13: eine schematische Schnittdarstellung des erfindungsgemäßen Montageverfahrens.

In den verschiedenen Figuren der Zeichnung sind gleiche oder funktionsgleiche Elemente mit dem gleichen Bezugszeichen versehen. Die Beschreibung gilt für alle Zeichnungsfiguren, in denen das entsprechende Teil ebenfalls zu erkennen ist.

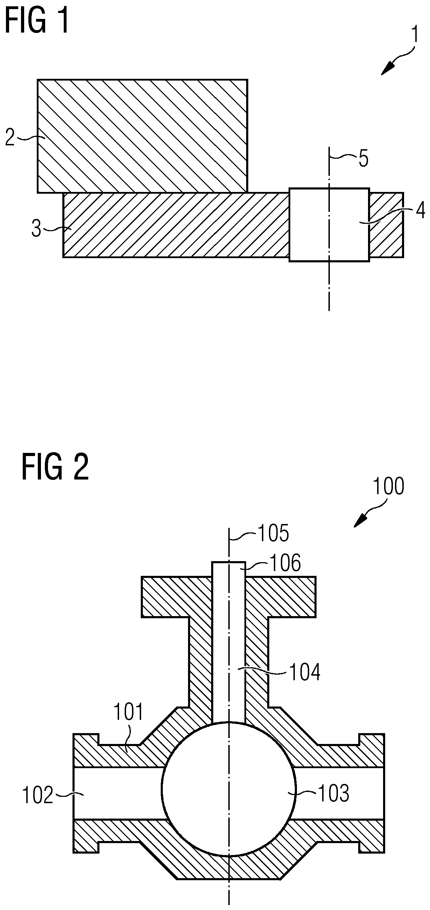

Figur 1 zeigt schematisch eine Prinzipdarstellung eines Stellantriebs 1 für eine (Luft-)Klappe oder ein Ventil 100 (siehe Figur 2) in einer Seitenansicht. Der Stellantrieb 1 weist einen Grundkörper auf, welcher das Gehäuse des Stellantriebs 1 bildet oder Teil dieses Gehäuses ist. Im dargestellten Fall ist der Grundkörper mehrteilig ausgebildet und umfasst eine Antriebseinheit 2 sowie eine Getriebeeinheit 3, welche mit der Antriebseinheit 2 mechanisch gekoppelt ist. Zur Kopplung mit der (Luft-)Klappe oder dem Ventil 100 weist der Stellantrieb 1 abtriebsseitig ein mit der Getriebeeinheit 3 mechanisch gekoppeltes und um eine Stellachse 5 drehbares Stellelement 4 auf. Durch Ansteuern der Antriebseinheit 2 kann das Stellelement 4 über die Kopplung mit der Getriebeeinheit 3 in Rotation versetzt werden. Die Getriebeeinheit 3 ist dabei vorteilhafterweise als Reduziergetriebe ausgebildet, um abtriebsseitig die Drehzahl des Stellelements 4 zu reduzieren sowie im Gegenzug das am Stellelement 4 anliegende Drehmoment im gleichen Verhältnis zu erhöhen.

In Figur 2 ist eine Schnittdarstellung eines Ventils 100 in einer in einer Seitenansicht schematisch dargestellt. Das Ventil 100 weist ein Gehäuse 101 auf, in dem ein rohrförmiger Abschnitt 102 zur Führung eines flüssigen oder gasförmigen Volumenstroms ausgebildet ist. In dem rohrförmigen Abschnitt 102 ist ein um eine Stellachse 105 drehbares Stellglied 103 angeordnet, um den Volumenstrom in dem rohrförmigen Abschnitt verändern zu können. Diese Veränderung des Volumenstroms kann je nach Stellung des drehbar gelagerten Stellglieds 103 von maximal geöffnet bis vollständig verschlossen variieren. Zur Betätigung des Stellglieds 103 ist ein drehbar im Gehäuse 101 gelagerter ein Schaft 104 vorgesehen, an dessen einem Ende das Stellglied 103 befestigt ist und dessen anderes Ende aus dem Gehäuse 101 herausragt und einen Antriebszapfen 106 aufweist. Das Ende des Schafts 104 kann dabei unmittelbar als Antriebszapfen 106 ausgebildet sein, d.h. der Antriebszapfen 106 ist einstückig an den Schaft 104 angeformt. Alternativ dazu kann der Antriebszapfen 106 auch als ein drehfest mit dem Schaft 104 verbundenes, eigenständiges Bauteil ausgebildet sein, was insbesondere von Vorteil ist, wenn die Länge des Schafts 104 für den jeweiligen Anwendungsfall zu gering sein sollte.

Bei der Montage des Stellantriebs 1 an dem Ventil 100 wird das Stellelement 4 des Stellantriebs 1 über ein hierfür geeignetes Koppelelement mit dem Antriebszapfen 106 des Ventils 100 drehfest verbunden. Auf diese Weise ist eine Betätigung des Ventils 100 mittels des Stellantriebs 1 möglich. Der Begriff "rohrförmiger Abschnitt" ist unabhängig von der geometrischen Gestalt des Rohrquerschnitts zu verstehen: ein rohrförmiger Abschnitt mit kreisförmigem Querschnitt ist demnach ebenso von diesem Begriff umfasst wie ovale oder rechteckige Querschnitte, beispielsweise zur Führung eines Gasvolumens zur Raumklimatisierung. Entsprechend ist das in Figur 2 dargestellte Durchflussventil 100 nur beispielhaft zu verstehen: eine Kopplung des Stellantriebs 1 mit jedem andere durch eine Drehbewegung betätigbaren Ventil oder eine Lüftungsklappe sind vom Gedanken der Erfindung ebenfalls umfasst.

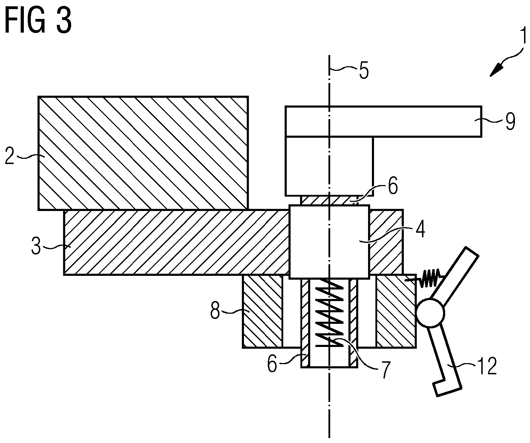

In Figur 3 ist ein erstes Ausführungsbeispiel des erfindungsgemäßen Stellantriebs 1 zur Montage an einer (Luft-)Klappe oder für ein Ventil 100 zum Einstellen eines gasförmigen oder flüssigen Volumenstroms in einer Seitenansicht schematisch dargestellt. Der erfindungsgemäße Stellantrieb 1 ähnelt äußerlich dem in Figur 1 dargestellten Stellantrieb und weist dementsprechend einen Grundkörper auf, welcher mehrteilig ausgebildet und die Antriebseinheit 2 sowie die Getriebeeinheit 3, welche mit der Antriebseinheit 2 mechanisch gekoppelt ist, umfasst. Im Unterschied zu dem in Figur 1 dargestellten Stellantrieb weist das Stellelement 4 des erfindungsgemäßen Stellantriebs 1 eine um die Stellachse 5 drehbar angeordnete Antriebshülse 6 auf, welche drehfest mit dem Stellelement 4 gekoppelt ist und mit Hilfe der Antriebseinheit 2 über die Kopplung mit der Getriebeeinheit 3 in Rotation um die Stellachse 5 versetzt werden kann. Die Antriebshülse 6 ist zumindest abschnittsweise von einem Adapterteil 8 umgeben, welches an einer Unterseite des Grundkörpers des Stellantriebs 1 - hier die Unterseite der Getriebeeinheit 3 - befestigt ist.

Durch Einstecken des Antriebszapfens 106 in die Antriebshülse 6 ist die Antriebshülse 6 mit dem Stellglied 103 der (Luft-)Klappe bzw. des Ventils 100 drehfest koppelbar. In der Antriebshülse 6 ist ein als Druckfeder ausgebildetes Federelement 7 angeordnet, welches beim Aufstecken der Antriebshülse 6 auf den Antriebszapfen 106 zusammengedrückt wird und infolgedessen eine Federkraft auf Antriebshülse 6 und Antriebszapfen 106 ausübt, welche diese auseinander drängt. Das Aufstecken der Antriebshülse 6 auf den Antriebszapfen 206 entgegen der Federkraft erfolgt, um auf diese Weise das Lösen der Verbindung zwischen Antriebshülse 6 und Antriebszapfen 106 zu unterstützen.

Weiterhin weist der Stellantrieb 1 auf einer der Antriebshülse 6 abgewandten Seite ein manuell betätigbares Handbedienelement 9 zur manuellen Betätigung der Antriebshülse 6 auf. Das Handbedienelement 9 ist mit dem Stellelement 4 oder direkt mit der Antriebshülse 6 drehfest verbindbar. Mit Hilfe des Handbedienelements 9 kann die Antriebshülse 6 von Hand um die Stellachse 5 gedreht werden, beispielsweise um eine Justage der Antriebshülse 6 relativ zum Antriebszapfen 106 oder - im Falle eines mit der Antriebshülse 6 bereits gekoppelten Antriebszapfens 106 - eine Justage des Stellglieds 103 der (Luft-)Klappe bzw. des Ventils 100 vorzunehmen. Ferner weist der Stellantrieb 1 ein als Rastelement ausgebildetes Befestigungsmittel 12 auf, welches im dargestellten Ausführungsbeispiel am Adapterteil 8 befestigt ist und dazu dient, den Stellantrieb 4 an der (Luft-)Klappe oder dem Ventil 100 zu befestigen, um ein unbeabsichtigtes Lösen des Stellantriebs 1 von der (Luft-)Klappe oder dem Ventil 100 zu verhindern. Es sei angemerkt, dass sowohl die Anordnung des Handbedienelements 9 am Stellantrieb 1 als auch die Ausführung des Befestigungsmittels 12 als Rastelement nicht zwingend erforderlich sind und lediglich vorteilhafte Ausführungsformen des Stellantriebs 1 darstellen.

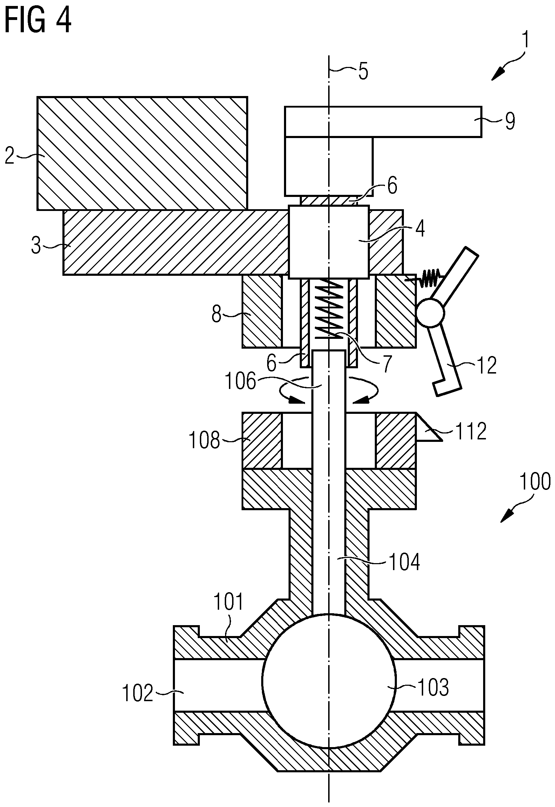

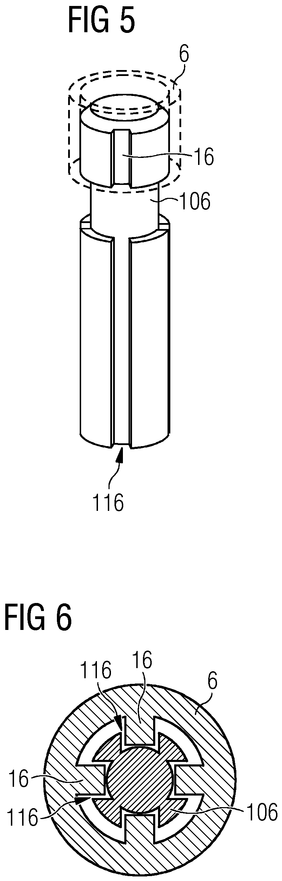

Figur 4 zeigt schematisch eine erste Montageposition der erfindungsgemäßen Anordnung, bestehend aus dem erfindungsgemäßen Stellantrieb 1 und einem Ventil 100, bei der der Antriebszapfen 106 bis zu einer ersten Koppelposition, in die Antriebshülse 6 eingeführt ist. Zur Erläuterung des Zusammenwirkens von Antriebshülse 6 und Antriebszapfen 106 ist diese erste Koppelposition zwischen Antriebshülse 6 und Antriebszapfen 106 als Detaildarstellung in Figur 5 dargestellt. Figur 6 zeigt hierzu eine schematisierte Schnittdarstellung.

Vorbereitend zur eigentlichen Montage wird ein Adapterteil 108 über den aus dem Gehäuse 101 herausstehenden Schaft 104 des Ventils 100 geführt und am Gehäuse 101 befestigt. An einem äußeren Abschnitt des Adapterteils 108 ist ein als Rastkante ausgebildetes Rastelement 112 ausgeformt, welche zum Zusammenwirken mit dem am Adapterteil 8 des Stellantriebs 1 angeordneten Befestigungsmittel 12 ausgebildet ist. In der Darstellung der Figur 4 ist aus Gründen der Übersichtlichkeit lediglich eine solche Kombination aus Befestigungsmittel 12 und Rastkante 112 dargestellt. Es ist jedoch ebenso möglich, mehrere solche Kombinationen zu verwenden, indem mehrere Befestigungsmittel 12 am Adapterteil 8 angeordnet werden, welche mit jeweils mit einer von mehreren am Adapterteil 108 ausgebildeten Rastkanten zusammenwirken, um eine sichere Verbindung zwischen Stellantrieb 1 und Ventil 100 zu gewährleisten. Darüber hinaus ist die genaue Ausführung der Befestigungsmittel 12 nicht erfindungswesentlich; andere Mittel zur Fixierung des Stellantriebs 1 am Ventil 100 kommen daher ebenfalls in Betracht und sind von der Erfindung mit umfasst.

Um in der ersten Koppelposition ein Drehmoment von der Antriebshülse 6 auf den Antriebszapfen 106 zu übertragen, weist die Antriebshülse 6 im Bereich ihrer unteren Öffnung mehrere an der Innenseite der Antriebshülse 6 ausgebildete Stege 16 auf, welche parallel zur Stellachse 5 verlaufen und beim Einführen des Antriebszapfens 106 in die Öffnung der Antriebshülse 6 in an einer Mantelfläche des Antriebszapfens 106 ausgebildete rillenförmige Nuten 116 eingreifen. Auf die Weise ist in tangentialer Richtung, d.h. bei einer Rotation um die Stellachse 5, ein Formschluss zwischen der Antriebshülse 6 und dem Antriebszapfen 106 gebildet, welcher die Übertragung eines Drehmoments von der Antriebshülse 6 auf den Antriebszapfen 106 ermöglicht.

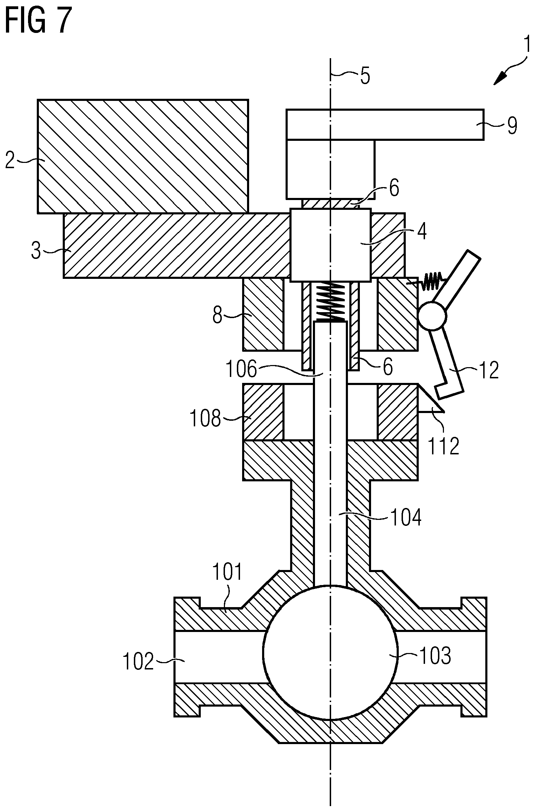

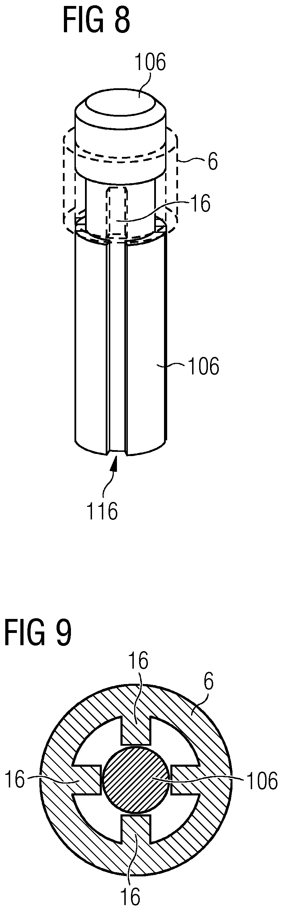

In Figur 7 ist die erfindungsgemäße Anordnung in einer zweiten Montageposition dargestellt, bei der der Antriebszapfen 106 bis zu einer zweiten Koppelposition, in die Antriebshülse 6 eingeführt ist. Diese zweite Koppelposition unterscheidet sich von der ersten Koppelposition somit durch eine Verschiebung der Antriebshülse 6 in Richtung des Antriebszapfens 106 entlang der Stellachse 5. Um das Zusammenspiel zwischen Antriebshülse 6 und Antriebszapfen 106 in der zweite Koppelposition zu verdeutlichen, zeigt Figur 8 eine zu Figur 5 korrespondierende Detaildarstellung der Antriebshülse 6 sowie des Antriebszapfens 106 in der zweiten Koppelposition. Korrespondierend zu Figur 6 zeigt Figur 9 hierzu eine schematisierte Schnittdarstellung.

Die an der Innenseite der Antriebshülse 6 ausgebildeten Stege 16 verlaufen nicht über die gesamte Länge der Antriebshülse 6, sondern lediglich im Bereich der unteren Öffnung (vgl. Figuren 5 und 8). Auch die am Antriebszapfen 106 ausgebildeten Nuten 116 verlaufen nicht durchgängig über die gesamte Länge des Antriebszapfens 116, sondern sind in einem mittleren Abschnitt des Antriebszapfens 106 derart unterbrochen, dass die an der Innenseite der Antriebshülse 6 ausgebildeten Stege 16 keine formschlüssige Kopplung mit den Nuten 116 bilden können (siehe Schnittdarstellung der Figur 9). Dieser mittlere Abschnitt des Antriebszapfens 106 stellt die zweite Koppelposition dar, in der kein Drehmoment von der Antriebshülse 6 auf den Antriebszapfen 106 übertragbar ist. In dieser zweiten Koppelposition ist somit eine Ausrichtung der Drehwinkellage des Stellantriebs 1 um die Stellachse 5 relativ zum Ventil 100 möglich, ohne dass dabei die Position des Antriebszapfens 106 - und damit des Stellglieds 103 - verändert wird. Unter dem Begriff "Drehwinkellage" ist dabei die Ausrichtung des Stellantriebs 1 relativ zum Ventil 100 - beispielsweise parallel oder quer zum rohrförmigen Abschnitt 102 - zu verstehen. Aufgrund der Verwendung von vier gleichmäßig am Umfang verteilten Nuten 116 sowie vier hinsichtlich ihrer Anordnung dazu korrespondierenden Stegen 16 ist die Drehwinkellage des Stellantriebs 1 in Winkelschritten von 90° variierbar.

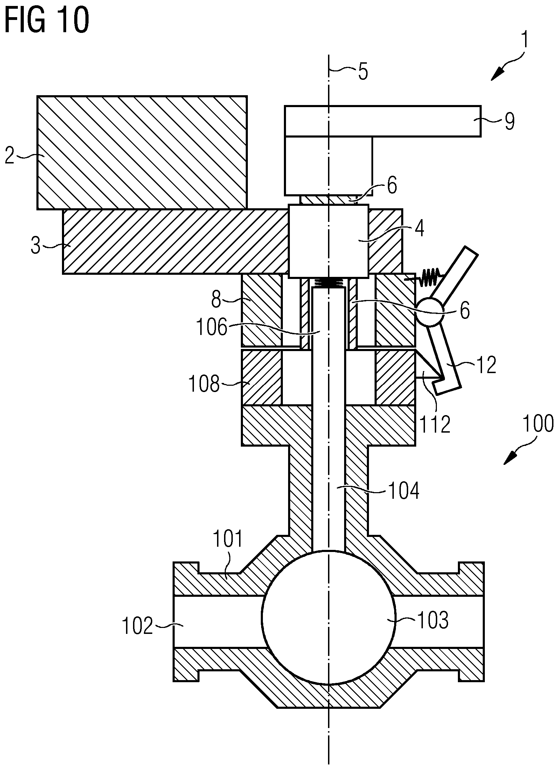

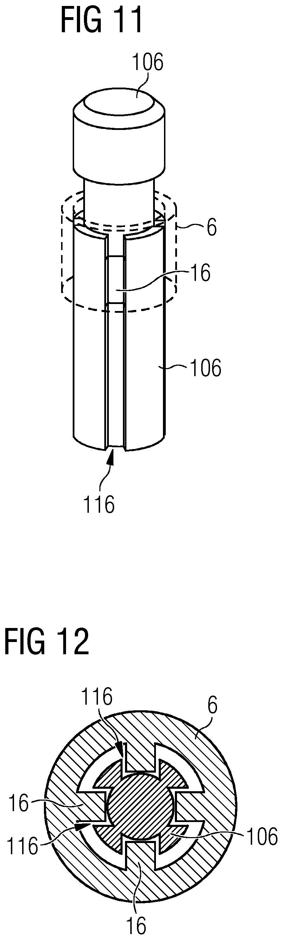

In Figur 9 ist die erfindungsgemäße Anordnung in einer dritten Montageposition dargestellt, bei der der Antriebszapfen 106 bis zu einer dritten Koppelposition, in die Antriebshülse 6 eingeführt ist. Diese dritte Koppelposition unterscheidet sich von der zweiten Koppelposition wiederum durch eine Verschiebung der Antriebshülse 6 in Richtung des Antriebszapfens 106 entlang der Stellachse 5. Figur 10 zeigt eine zu Figur 9 korrespondierende Detaildarstellung der Antriebshülse 6 sowie des Antriebszapfens 106 in der dritten Koppelposition. Figur 11 zeigt schematisiert die dazugehörige Schnittdarstellung.

Die dritte Koppelposition stellt die finale Montageposition der Anordnung aus Stellantrieb 1 und Ventil 100 dar, bei der ein Drehmoment von der Antriebshülse 6 auf den Antriebszapfen 106 übertragbar ist. Diese Drehmomentübertagung ist durch den Formschluss zwischen den an der Innenseite der Antriebshülse 6 ausgebildeten Stegen 16 sowie der im unteren Bereich der Mantelfläche des Antriebszapfens 106 hierzu korrespondierend verlaufenden Nuten 116 realisiert.

Weiterhin ist der Stellantrieb 1 in dieser dritten Koppelposition fest aber lösbar an dem Ventil 100 befestigt. Dies wird durch das zumindest eine - in den Darstellungen der Figuren als am Adapterteil 8 als federndes Rastelement ausgebildete - Befestigungsmittel 12 erreicht, welches an der zumindest einem am Adapterteil 118 hinsichtlich seiner Lage korrespondierend angeordneten Rastkante 112 verrastet ist. Wie vorstehend bereits beschrieben ist die Art und Funktionsweise des Befestigungsmittels 12 nicht erfindungswesentlich. Wesentlich ist, dass das Befestigungsmittels 12 Lösen der Verbindung zwischen Stellantrieb 1 und Ventil 100 zumindest in axialer Richtung, d.h. entgegen der Montagerichtung, wirksam verhindert.

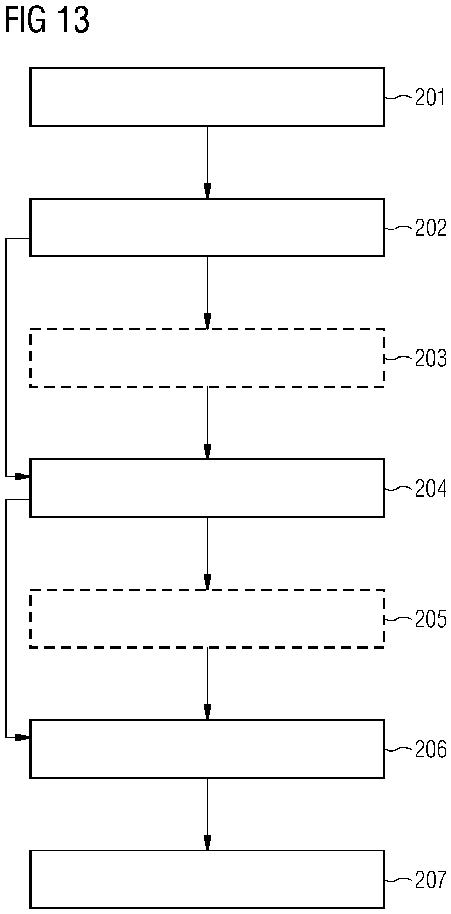

Anhand von Figur 13 wird im Folgenden das erfindungsgemäße Montageverfahren näher erläutert. Zunächst werden in einem ersten Verfahrensschritt 201 die Antriebshülse 6 des Stellantriebs 1 sowie der Antriebszapfen 106 der (Luft-)Klappe oder des Ventils 100 entlang der Stellachse 5 parallel sowie fluchtend ausgerichtet, so dass die Stellachse 5 des Stellantriebs 1 sowie die Stellachse 105 der der (Luft-)Klappe bzw. des Ventils 100 deckungsgleich sind.

In einem zweiten Verfahrensschritt 202 wird der Antriebszapfen 106 in die Antriebshülse 6 entlang der Stellachse 5 bzw. 105 eingeführt, bis die erste Koppelposition erreicht ist. Da in der ersten Koppelposition eine Drehmomentübertragung von der Antriebshülse 6 auf den Antriebszapfen 16 möglich ist, kann in einem dritten Verfahrensschritt 203 in dieser ersten Koppelposition eine Winkeljustage des Antriebszapfens 106 erfolgen. Hierzu wird der Grundkörper des Stellantriebs 1 von Hand um die Stellachse 5 gedreht. Durch das dabei von der Antriebshülse 6 auf den Antriebszapfen 16 übertragene Drehmoment kann das Stellglied 103 der (Luft-)Klappe oder des Ventils 100 hinsichtlich seiner Drehwinkellage exakt eingestellt werden. Dieser dritte Verfahrensschritt 203 ist jedoch nicht zwingend erforderlich.

In einem vierten Verfahrensschritt 204 wird der Antriebszapfen 106 weiter in die Antriebshülse 6 entlang der Stellachse 5 bzw. 105 eingeführt, bis die zweite Koppelposition erreicht ist. Da in der zweiten Koppelposition keine Drehmomentübertragung von der Antriebshülse 6 auf den Antriebszapfen 16 möglich ist, kann in der zweiten Koppelposition in einem fünften Verfahrensschritt 205 ein Ausrichten des Stellantriebs 1 relativ zum Gehäuse 101 der (Luft-) Klappe bzw. des Ventils 100 erfolgen. Hierzu wird der Grundkörper des Stellantriebs 1 in der zweiten Koppelposition von Hand um die Stellachse 5 gedreht, bis er die gewünschte Einbaulage aufweist. Ist dies bereits beim Ausrichten des Stellantriebs 1 (erster Verfahrensschritt 201) der Fall, so kann der fünfte Verfahrensschritt 205 auch entfallen.

In einem sechsten Verfahrensschritt 206 erfolgt ein weiteres Zustellen der Antriebshülse 6 in Richtung des Antriebszapfens 106 bis die dritte Koppelposition erreicht ist. Falls der dritte Verfahrensschritt 203 und der fünfte Verfahrensschritt 205 nicht erforderlich sein sollten, kann der Verfahrensschritt 206 auch unmittelbar nach dem zweiten Verfahrensschritt 202 erfolgen, indem das Zustellen der Antriebshülse 6 in Richtung des Antriebszapfens 106 bis zur dritten Koppelposition "in einem Rutsch" über die erste und zweite Koppelposition hinweg erfolgt.

Abschließend wird in einem letzten, siebten Verfahrensschritt 207 der Stellantrieb 1 an der (Luft-)Klappe oder dem Ventil 100 mittels des am Stellantrieb 1 ausgebildeten zumindest einen Befestigungsmittels 12 fixiert. Die Anordnung aus Stellantrieb 1 und (Luft-) Klappe bzw. Ventil 100 ist nunmehr betriebsbereit.

Da der dritte Verfahrensschritt 203 sowie der fünfte Verfahrensschritt 205 für die Durchführung des erfindungsgemäßen Montageverfahrens nicht zwingend erforderlich sind, sind diese beiden Verfahrensschritte 203 und 205 in der Darstellung der Figur 13 strichliert dargestellt, d.h. es ist ebenso möglich vom zweiten Verfahrensschritt 202 direkt zum vierten Verfahrensschritt 204 und/oder vom vierten Verfahrensschritt 204 direkt zum sechsten Verfahrensschritt 206 zu gelangen.

### Bezugszeichenliste

- 1: Stellantrieb
- 2: Antriebseinheit
- 3: Getriebeeinheit
- 4: Stellelement
- 5: Stellachse
- 6: Antriebshülse
- 7: Federelement
- 8: Adapterteil
- 9: Handbedienelement
- 10: Grundkörper
- 11: Hebelelement
- 12: Befestigungsmittel
- 16: Steg

- 100: Ventil
- 101: Gehäuse
- 102: rohrförmiger Abschnitt
- 103: Stellglied
- 104: Schaft
- 105: Stellachse
- 106: Antriebszapfen
- 108: Adapterteil
- 112: Rastelement
- 116: Nut

## Patentansprüche

1. Stellantrieb (1) für eine (Luft-)Klappe oder für ein Ventil (100) zum Einstellen eines gasförmigen oder flüssigen Volumenstroms, aufweisend eine in oder an einem Grundkörper des Stellantriebs (1) aufgenommene Antriebseinheit (2) sowie ein abtriebsseitiges Stellelement (4), wobei das Stellelement (4) eine um eine Stellachse (5) drehbar angeordnete Antriebshülse (6) aufweist,
**dadurch gekennzeichnet,**
**dass** die Antriebshülse (6) mit einem drehbar gelagerten Antriebszapfen (106) der (Luft-) Klappe oder des Ventils (100) derart koppelbar ist, dass in einer ersten Koppelposition ein Drehmoment von der Antriebshülse (6) auf den Antriebszapfen (106) übertragbar ist, während in einer zweiten Koppelposition kein Drehmoment von der Antriebshülse (6) auf den Antriebszapfen (106) übertragbar ist.

2. Stellantrieb (1) nach Anspruch 1, wobei die Antriebshülse (6) Mittel (16) zur formschlüssigen Kopplung mit dem Antriebszapfen (106) aufweist.

3. Stellantrieb (1) nach einem der vorherigen Ansprüche, wobei das Stellelement (4) ein Federelement (7) zur federelastischen Kopplung der Antriebshülse (6) mit dem Antriebszapfen (106) aufweist.

4. Stellantrieb (1) nach einem der vorherigen Ansprüche, wobei die zweite Position zwischen der ersten Koppelposition und einer dritten Koppelposition liegt, in der ein Drehmoment von der Antriebshülse (6) auf den Antriebszapfen (106) übertragbar ist.

5. Stellantrieb (1) nach Anspruch 4, wobei der Stellantrieb (4) zumindest ein Befestigungsmittel (12) aufweist, um den Stellantrieb (4) an der (Luft-)Klappe oder dem Ventil (100) in der dritten Koppelposition zu fixieren.

6. Stellantrieb (1) nach Anspruch 5, wobei das zumindest eine Befestigungsmittel (12) in Achsrichtung der Stellachse (5) formschlüssig wirkend ausgebildet sind.

7. Stellantrieb (1) nach einem der vorherigen Ansprüche, wobei das Stellelement (4) auf einer der Antriebshülse (6) abgewandten Seite ein manuell betätigbares Handbedienelement (9) zur manuellen Betätigung der Antriebshülse (6) aufweist.

8. Stellantrieb (1) nach Anspruch 7, wobei das Handbedienelement (9) einen zylindrischen Grundkörper (10) sowie ein radial davon abstehendes Hebelelement (11) aufweist, wobei das Hebelelement (11) am Grundkörper (10) in radialer Richtung linear verschiebbar gelagert ist.

9. Anordnung mit einem nach einem der Ansprüche 2 bis 8 gebildeten Stellantrieb (1) sowie mit einer (Luft-)Klappe oder einem Ventil (100) zum Einstellen eines gasförmigen oder flüssigen Volumenstroms, welche(s) einen mit der Antriebshülse (6) des Stellantriebs (4) drehfest gekoppelten Antriebszapfen (106) aufweist.

10. Anordnung nach Anspruch 9, wobei die (Luft-)Klappe oder das Ventil (100) ein Gehäuse (101) mit einem rohrförmigen Abschnitt (102) aufweist, wobei der Antriebszapfen (106) relativ zum Gehäuse (101) drehbar gelagert ist.

11. Verfahren zur Montage einer Anordnung nach einem der Ansprüche 9 bis 10, mit den Schritten:
a) axiales Ausrichten der Antriebshülse (6) und des Antriebszapfens (106) entlang der Stellachse (5);
b) Einführen des Antriebszapfens (106) in die Antriebshülse (6) entlang der Stellachse (5) bis zur ersten Koppelposition;
c) Zustellen der Antriebshülse (6) in Richtung des Antriebszapfens (106) bis zur zweiten Koppelposition;
d) Weiteres Zustellen der Antriebshülse (6) in Richtung des Antriebszapfens (106) bis zur dritten Koppelposition;
e) Fixieren des Stellantriebs (1) an der (Luft-)Klappe oder dem Ventil (100) mittels der am Stellantrieb (1) ausgebildeten Befestigungsmittel (12) in der dritten Koppelposition.

12. Verfahren nach Anspruch 11, wobei vor Erreichen der dritten Koppelposition eine Winkeljustage des Antriebszapfens (106) erfolgt, indem der Grundkörper in der ersten Koppelposition um die Stellachse (5) gedreht wird.

13. Verfahren nach einem der Ansprüche 11 oder 12, wobei vor Erreichen der dritten Koppelposition ein Ausrichten des Stellantriebs (1) relativ zum Gehäuse (101) der (Luft-) Klappe bzw. des Ventils (100) erfolgt, indem der Grundkörper in der zweiten Koppelposition um die Stellachse (5) gedreht wird.
